# EUROPEAN PATENT APPLICATION

(11) **EP 2 131 360 A1**
(43) Date of publication of application: **09.12.2009**
(21) Application number: 08721244.5
(22) Date of filing: 04.03.2008
(51) Int. Cl.: G11B 7/257, C09D 4/02, C09D 5/00, G11B 7/24, G11B 7/254, G11B 7/26

(54) **ULTRAVIOLET-CURABLE COMPOSITION FOR OPTICAL DISK INTERMEDIATE LAYER AND OPTICAL DISK**

(30) Priority: 23.03.2007 JP 2007076672
(71) Applicant: DIC Corporation, Tokyo 174-8520 (JP)
(72) Inventor: KITSUNAI, Takashi, Kitaadachi-gun Saitama 362-8577 (JP); ITO, Daisuke, Kitaadachi-gun Saitama 362-8577 (JP)
(74) Representative: Albrecht, Thomas
(86) International application number: PCT/JP2008/053824
(87) International publication number: WO 2008/120525

(57) **Abstract**

An ultraviolet-curable composition for an optical disk intermediate layer includes a urethane (meth)acrylate (a) having three or more radical-polymerizable unsaturated bonds, a (meth)acrylate (b) having four or more radical-polymerizable unsaturated bonds which is other than the urethane (meth)acrylate (a), and a monofunctional alicyclic (meth)acrylate (c), wherein a B-type viscosity at 25°C is not more than 1,000 mPa·s. Even when a low-cost general-purpose resin such as a polycarbonate is used as a stamper, deformation or loss of the uneven pattern shape or cracking of the disk is very unlikely, meaning the ultraviolet-curable composition is very useful for the intermediate layers of optical disks.

## Description

### TECHNICAL FIELD

The present invention relates to an ultraviolet-curable composition that is used as an intermediate layer on which an uneven pattern is formed within an optical disk such as a DVD, HD-DVD or Blu-ray Disc.

### BACKGROUND ART

In recent years, as demands have grown for increased capacities for optical disks such as DVD, HD-DVD and Blu-Ray Discs, the use of multilayer optical disks having a plurality of information recording layers has become widespread. Multilayer optical disks typically have a structure in which a plurality of information recording layers are laminated together with in intermediate layer disposed therebetween. Specifically, a first information recording layer is provided on a substrate, an intermediate layer is formed on top of this first information recording layer, an uneven pattern is formed on the surface of the intermediate layer on the opposite side to the first information recording layer, and a second information recording layer is then laminated onto the intermediate layer, thereby transferring the uneven pattern of the intermediate layer to the second information recording layer. Formation of the uneven pattern in the intermediate layer is usually conducted using a 2P (Photo Polymerization) method in which the resin layer of the intermediate layer is pressed using a stamper (see Patent Document 1).

This 2P method includes a step in which the intermediate layer is separated from the stamper. At this point, if the separatability between the stamper and the intermediate layer is poor, then a portion of the intermediate layer may remain attached to the stamper, resulting in a defect that is subsequently transferred to the next disk. Accordingly, in those cases where a resin is used for forming the stamper, resins such as polyolefins are widely used, as they exhibit favorable separatability from the various ultraviolet-curable resins typically used for the intermediate layer (see Patent Documents 2 and 3). However, although these types of polyolefin-based stampers exhibit excellent separatability from the various ultraviolet-curable resins, because they are expensive, a shift to resin stampers formed from low-cost polycarbonates or the like has been sought. Furthermore, because resin stampers are reused, any ultraviolet-curable resin that has adhered to the stamper surface must be cleaned and removed, meaning an ultraviolet-curable resin with favorable separatability has also been sought.

As an example of the type of ultraviolet-curable resin used in conventional optical disks, Patent Document 4 discloses an optical disk in which a resin having a Tg value of at least 90°C is used as the intermediate layer. Cured films that have a high Tg value generally also have a high elastic modulus, and in order to employ the 2P method, this type of cured film having a high elastic modulus must be used.

However, because these conventional resin compositions use large amounts of polyfunctional acrylates in order to obtain a cured film having a high elastic modulus, the curing shrinkage that occurs upon UV curing tends to cause tilt of the optical disk substrate.

[Patent Document 1] Japanese Unexamined Patent Application, First Publication No. Hei 09-161329
[Patent Document 2] Japanese Unexamined Patent Application, First Publication No. 2003-085839
[Patent Document 3] Japanese Unexamined Patent Application, First Publication No. 2005-166241
[Patent Document 4] Japanese Unexamined Patent Application, First Publication No. 2005-129199

### DISCLOSURE OF INVENTION

### PROBLEMS TO BE SOLVED BY THE INVENTION

An object of the present invention is to provide an ultraviolet-curable composition for an optical disk which, even when a low-cost general purpose resin such as a polycarbonate is used as the stamper, exhibits favorable separatability, is resistant to deformation or loss of the uneven pattern shape and to cracking of the disk, and produces minimal tilt upon curing, wherein the composition is particularly useful as the intermediate layer of a multilayer optical disk. Moreover, another object of the present invention is to provide an optical disk having a cured film formed from this ultraviolet-curable composition as an intermediate layer.

### MEANS TO SOLVE THE PROBLEMS

An ultraviolet-curable composition of the present invention includes specific amounts of a urethane (meth)acrylate that imparts flexibility to the cured film, a tetrafunctional or higher (meth)acrylate that increases the cross-linking density within the cured film, and a monofunctional (meth)acrylate that regulates the cross-linked structure, wherein a B-type viscosity at 25°C is not more than 1,000 mPa·s. A cured film obtained using a composition having this type of configuration has a large number of cross-linking points due to the presence of the tetrafunctional or higher (meth)acrylate, and includes the flexible structure of the urethane (meth)acrylate positioned between some of these cross-linking points. As a result, a strong yet flexible cured film can be formed, meaning the level of adhesion to general-purpose resins can be suppressed to a low level, which represents ideal properties for the intermediate layer of an optical disk. In addition, the (meth)acrylate having a monofunctional alicyclic structure enables the cured film surface to be readily peeled from general-purpose resins as a result of the alicyclic structure, and because this component includes only a single (meth)acrylate region, excessive increases in the cross-linking density can be suppressed, meaning the degree of curing shrinkage upon curing can also be suppressed. Accordingly, the resulting cured film can be separated favorably from a stamper formed from a general-purpose resin, and because the degree of curing shrinkage that occurs upon UV curing is minimal, the composition is ideal for the intermediate layer of an optical disk. As a result of these properties, disk cracking and deformation or loss of the uneven pattern are unlikely to occur during separation from the stamper.

In other words, the present invention provides an ultraviolet-curable composition for an optical disk intermediate layer containing a urethane (meth)acrylate (a) having three or more radical-polymerizable unsaturated bonds, a (meth)acrylate (b) having four or more radical-polymerizable unsaturated bonds which is other than the urethane (meth)acrylate (a), and a monofunctional alicyclic (meth)acrylate (c), wherein a B-type viscosity at 25°C is not more than 1,000 mPa·s.

### EFFECT OF THE INVENTION

The ultraviolet-curable composition for an optical disk intermediate layer according to the present invention is capable of yielding a cured product that exhibits favorable separatability even from polycarbonates, meaning a favorable uneven pattern can be formed even without using an expensive olefin-based resin as the stamper, and the composition can therefore be used favorably for the intermediate layer used for forming the pits and grooves of an optical disk.

Furthermore, because the ultraviolet-curable composition for an optical disk intermediate layer according to the present invention is able to impart suitable flexibility to the cured film as a result of the urethane (meth)acrylate component, tilt of the cured film upon curing, and deformation of the cured film accompanying changes in the external environment can be reduced. Accordingly, by using this composition as the intermediate layer of an optical disk, an optical disk can be obtained that not only exhibits superior initial properties, but also suffers from minimal property deterioration.

### BEST MODE FOR CARRYING OUT THE INVENTION

An ultraviolet-curable composition for an optical disk intermediate layer according to the present invention contains a urethane (meth)acrylate (a) having three or more radical-polymerizable unsaturated bonds (hereafter frequently referred to as "the trifunctional or higher urethane (meth)acrylate (a)"), a (meth)acrylate (b) having four or more radical-polymerizable unsaturated bonds which is other than the urethane (meth)acrylate (a) (hereafter frequently referred to as "the tetrafunctional or higher (meth)acrylate (b)"), and a monofunctional alicyclic (meth)acrylate (c), wherein the composition has a B-type viscosity at 25°C of not more than 1,000 mPa·s. In the present description, the term "(meth)acrylate"' refers to either the acrylate or the methacrylate. Further, the term "intermediate layer" describes a layer such as a light transparent layer that is not provided at the outermost surface of the optical disk, but rather has other layers positioned above and below.

### [Trifunctional or higher urethane (meth)acrylate (a)]

The trifunctional or higher urethane (meth)acrylate (a) used in the present invention can be obtained by reacting a polyol compound, a polyisocyanate compound and a hydroxyl group-containing (meth)acrylate. By including the trifunctional or higher urethane (meth)acrylate (a), factors such as the number of cross-linking points within the cured film, the distance between cross-linking points, and the cross-linked structure can be better controlled, and by imparting the cured film with a suitable degree of flexibility, a cured film can be formed that exhibits superior separatability from polycarbonates, and minimal shape deformation such as tilt.

As the polyol compound used in forming the trifunctional or higher urethane (meth)acrylate (a), pentaerythritol, trimethylolpropane, neopentyl glycol, or alcohol-modified glycerol compounds or the like may be used, and of these, the use of a propylene glycol-modified glycerol compound is particularly favorable.

The urethane bond within the trifunctional or higher urethane (meth)acrylate (a) is obtained from the reaction between the aforementioned polyol compound and polyisocyanate compound. As the polyisocyanate compound, an isocyanurated polyisocyanate may also be used.

Furthermore, the isocyanurated polyisocyanate may also be used in combination with an isocyanate compound, and examples of this isocyanate compound include various alicyclic diisocyanate compounds such as dicyclohexylmethane diisocyanate and isophorone diisocyanate, various aromatic diisocyanate compounds such as tolylene diisocyanate, various aliphatic diisocyanate compounds such as hexamethylene diisocyanate and lysine diisocyanate, as well as other compounds such as hydrogenated xylylene diisocyanate and hydrogenated diphenylmethane-4,4'-diisocyanate. Of these, isophorone diisocyanate, tolylene diisocyanate and hexamethylene diisocyanate are particularly favorable.

Examples of the hydroxyl group-containing (meth)acrylate include 2-hydroxyethyl (meth)acrylate, 2-hydroxypropyl (meth)acrylate, 2-hydroxybutyl (meth)acrylate, 3-hydroxybutyl (meth)acrylate and 4-hydroxybutyl (meth)acrylate. Further, (meth)acrylates in which a portion of the hydroxyl groups of a polyol compound have been acrylylated can also be used, compounds such as polyethylene glycol mono(meth)acrylate, polypropylene glycol mono(meth)acrylate, pentaerythritol tri(meth)acrylate, and glycidyl methacrylate-(meth)acrylic acid adducts may also be used, and ring-opening reaction products of the various hydroxyl group-containing (meth)acrylate compounds and ε-caprolactone can also be used favorably. Of these compounds, 2-hydroxyethyl (meth)acrylate is particularly preferred.

The number average molecular weight (Mn) of the urethane (meth)acrylate used in the present invention, measured using gel permeation chromatography (GPC), is preferably not more than 15,000, and is more preferably within a range from 500 to 10,000. If the molecular weight is too high, then the composition becomes overly viscous and difficult to handle. In contrast, if the molecular weight is too low, then the distance between cross-linking points shortens, and therefore the curing shrinkage tends to increase. The GPC measurements are conducted using an HLC-8020 apparatus manufactured by Tosoh Corporation with a GMHx1-GMHx1-G200Hx1-G1000Hx1w column arrangement, using THF as the solvent and under conditions including a flow rate of 1.0 ml/min., a column temperature of 40°C and a detector temperature of 30°C. The molecular weight values are referenced against standard polystyrenes.

### [Tetrafunctional or higher (meth)acrylate (b)]

In the ultraviolet-curable composition of the present invention, including the tetrafunctional or higher (meth)acrylate (b) enables the elastic modulus of the cured product to be increased.

As the tetrafunctional or higher (meth)acrylate (b), polyfunctional (meth)acrylates such as ditrimethylolpropane tetra(meth)acrylate, pentaerythritol tetra(meth)acrylate, dipentaerythritol penta(meth)acrylate, dipentaerythritol hexa(meth)acrylate, and dipentaerythritol poly(meth)acrylate are able to impart the cured film with a high elastic modulus following curing, and are therefore preferred. Of these compounds, the use of at least one compound selected from among pentaerythritol tetraacrylate, pentaerythritol hexaacrylate and dipentaerythritol hexaacrylate is more preferred, and dipentaerythritol hexaacrylate is particularly desirable.

### [Monofunctional alicyclic (meth)acrylate (c)]

The monofunctional alicyclic (meth)acrylate (c) used in the present invention, by virtue of having a rigid cyclic structure, acts in combination with the tetrafunctional or higher (meth)acrylate to impart the cured film with a high elastic modulus at high temperature and a high glass transition temperature. Furthermore, by selecting and using a non-polar structure, the adhesion to resins such as polycarbonates can be reduced.

Examples of the monofunctional alicyclic (meth)acrylate (c) include isobornyl (meth)acrylate, norbornyl (meth)acrylate, 2-(meth)acryloyloxymethyl-2-methylbicycloheptaneadamantyl (meth)acrylate, dicyclopentenyl (meth)acrylate, dicyclopentanyl (meth)acrylate, dicyclopentenyloxyethyl (meth)acrylate, tetracyclododecanyl (meth)acrylate and cyclohexyl (meth)acrylate.

Of these, isobornyl (meth)acrylate, dicyclopentenyl (meth)acrylate and dicyclopentanyl (meth)acrylate are preferred. Isobornyl acrylate and isobornyl methacrylate are particularly desirable, and of these, isobornyl acrylate imparts the cured film with even greater rigidity and provides excellent separatability of the cured product from polycarbonates, and is therefore the most desirable.

### [Other radical-polymerizable compounds]

In order to favorably regulate properties such as the viscosity and the elastic modulus, the ultraviolet-curable composition for an optical disk intermediate layer according to the present invention may also include other radical-polymerizable compounds besides the aforementioned urethane (meth)acrylate (a), tetrafunctional or higher (meth)acrylate (b) and monofunctional alicyclic (meth)acrylate (c).

In the present invention, including a trifunctional (meth)acrylate (d) having three radical-polymerizable unsaturated bonds is preferable. As the trifunctional (meth)acrylate (d), the use of bis(2-acryloyloxyethyl)hydroxyethyl isocyanurate, bis(2-acryloyloxypropyl)hydroxypropyl isocyanurate, bis(2-acryloyloxybutyl)hydroxybutyl isocyanurate, bis(2-methacryloyloxyethyl)hydroxyethyl isocyanurate, bis(2-methacryloyloxypropyl)hydroxypropyl isocyanurate, bis(2-methacryloyloxybutyl)hydroxybutyl isocyanurate, tris(2-acryloyloxyethyl) isocyanurate, tris(2-acryloyloxypropyl) isocyanurate, tris(2-acryloyloxybutyl) isocyanurate, tris(2-methacryloyloxyethyl) isocyanurate, tris(2-methacryloyloxypropyl) isocyanurate, tris(2-methacryloyloxybutyl) isocyanurate, trimethylolpropane tri(meth)acrylate, pentaerythritol tri(meth)acrylate, or the tri(meth)acrylate of a triol obtained by adding 3 or more mols of ethylene oxide or propylene oxide to 1 mol of trimethylolpropane enables a high elastic modulus to be imparted following curing, and is therefore preferred. Of these compounds, the use of trimethylolpropane triacrylate is particularly desirable.

Furthermore, in the present invention, monofunctional and difunctional (meth)acrylates other than those listed above may also be used as ultraviolet-curable compounds. Examples of these other monofunctional (meth)acrylates include ethyl (meth)acrylate, butyl (meth)acrylate, 2-ethylhexyl (meth)acrylate, nonyl (meth)acrylate, tridecyl (meth)acrylate, hexadecyl (meth)acrylate, octadecyl (meth)acrylate, isoamyl (meth)acrylate, isodecyl (meth)acrylate, isostearyl (meth)acrylate, 2-hydroxyethyl (meth)acrylate, 3-chloro-2-hydroxypropyl (meth)acrylate, methoxyethyl (meth)acrylate, butoxyethyl (meth)acrylate, benzyl (meth)acrylate, nonylphenoxyethyl (meth)acrylate, tetrahydrofurfuryl (meth)acrylate, glycidyl (meth)acrylate, 2-hydroxy-3-phenoxypropyl (meth)acrylate, nonylphenoxyethyltetrahydrofurfuryl (meth)acrylate, caprolactone-modified tetrahydrofurfuryl (meth)acrylate, acryloylmorpholine, and phenoxyethyl (meth)acrylate.

Examples of the difunctional (meth)acrylates include 1,4-butanediol di(meth)acrylate, 3-methyl-1,5-pentanediol di(meth)acrylate, 1,6-hexanediol di(meth)acrylate, neopentyl glycol di(meth)acrylate, 2-methyl-1,8-octanediol di(meth)acrylate, 2-butyl-2-ethyl-1,3-propanediol di(meth)acrylate, ethylene glycol di(meth)acrylate, trimethylolpropane di(meth)acrylate, pentaerythritol di(meth)acrylate, polypropylene glycol di(meth)acrylate, the di(meth)acrylate of a diol obtained by adding 4 or more mols of ethylene oxide or propylene oxide to 1 mol of neopentyl glycol, ethylene oxide-modified phosphoric (meth)acrylate, ethylene oxide-modified alkylated phosphoric di(meth)acrylate, diethylene glycol di(meth)acrylate, dipropylene glycol di(meth)acrylate, tripropylene glycol di(meth)acrylate, polyether (meth)acrylate, diethylaminoethyl (meth)acrylate, and the di(meth)acrylate of a triol obtained by adding 3 or more mols of ethylene oxide or propylene oxide to trimethylolpropane.

Examples of alicyclic difunctional (meth)acrylates include norbornanedimethanol di(meth)acrylate, norbornanediethanol di(meth)acrylate, the di(meth)acrylate of a diol obtained by adding 2 mols of ethylene oxide or propylene oxide to norbornanedimethanol, tricyclodecanedimethanol di(meth)acrylate, tricyclodecanediethanol di(meth)acrylate, the di(meth)acrylate of a diol obtained by adding 2 mols of ethylene oxide or propylene oxide to tricyclodecanedimethanol, pentacyclopentadecanedimethanol di(meth)acrylate, pentacyclopentadecanediethanol di(meth)acrylate, the di(meth)acrylate of a diol obtained by adding 2 mols of ethylene oxide or propylene oxide to pentacyclopentadecanedimethanol, the di(meth)acrylate of a diol obtained by adding 2 mols of ethylene oxide or propylene oxide to pentacyclopentadecanediethanol, and dimethyloldicyclopentane di(meth)acrylate.

Moreover, oligomers such as polyester (meth)acrylate, polyether (meth)acrylate, and epoxy (meth)acrylate may also be used in combination with the trifunctional or higher urethane (meth)acrylate.

### [Ultraviolet-curable Composition]

By including the tetrafunctional or higher (meth)acrylate (b), the ultraviolet-curable composition of the present invention is able to form a rigid cured product with a high cross-linking density, a high elastic modulus and a high glass transition temperature, and the cured product is resistant to deformation during the recording of information. Furthermore, including the trifunctional or higher urethane (meth)acrylate (a) and the alicyclic (meth)acrylate (c) enables a cured product having an appropriate degree of flexibility to be obtained, which means that not only can excellent separatability be achieved from general-purpose resins, and particularly from polycarbonates, but shrinkage during curing can also be reduced. Accordingly, a cured product can be realized that exhibits a low adhesive strength, namely an adhesive strength relative to a polycarbonate substrate of not more than 3 kg/cm², preferably not more than 2 kg/cm², and more preferably 1.5 kg/cm² or less. Provided the adhesive strength is within the above range, peeling can be conducted favorably, and cracking or defects are less likely to occur within the polycarbonate substrate or the cured film upon separation.

The adhesive strength of the cured product of the ultraviolet-curable composition of the present invention relative to polycarbonate can be measured, for example, using the test described below. Namely, the ultraviolet-curable composition is coated onto a polycarbonate substrate of thickness 1.2 mm and cured by UV irradiation, a double-sided tape is bonded to a 10 mm square stainless steel attachment, and the cured film is then bonded to the attachment. The cured film is then cut around the periphery of the attachment using a cutter knife. Subsequently, using an electrically operated vertical motorized stand MX-500N manufactured by Imada Co., Ltd., the 10 mm square stainless steel attachment is pulled in a 90° direction at a rate of 125 mm/min., and the adhesive strength is measured.

The amount of the trifunctional or higher urethane (meth)acrylate (a) among the ultraviolet-curable compounds contained within the ultraviolet-curable composition is preferably within a range from 10 to 40% by mass, and more preferably from 15 to 35% by mass. Further, the amount of the tetrafunctional or higher (meth)acrylate (b) among the ultraviolet-curable compounds contained within the ultraviolet-curable composition is preferably within a range from 5 to 40% by mass, more preferably from 5 to 30% by mass, and still more preferably from 5 to 20% by mass. The amount of the monofunctional alicyclic (meth)acrylate (c) among the ultraviolet-curable compounds contained within the ultraviolet-curable composition is preferably within a range from 10 to 40% by mass, and more preferably from 15 to 35% by mass. Furthermore, the amount of trifunctional or higher (meth)acrylates among the ultraviolet-curable compounds contained within the ultraviolet-curable composition is preferably within a range from 40 to 80% by mass, and is more preferably from 50 to 70% by mass.

Provided the amount of each type of (meth)acrylate is within the respective range specified above, a very rigid cured film can be more readily obtained, which not only contributes to improved separatability from general-purpose resins, but because the cured film is extremely hard even at high temperatures, and has a high glass transition temperature, almost no deformation occurs even if the cured film is exposed to heat during recording.

In the present invention, compositions that include no methacrylate compounds having methacryloyl groups as the ultraviolet-curable compounds may also be used, although compositions that employ methacrylates as the ultraviolet-curable compounds can also be used favorably. In those cases where methacrylates are used, the amount of the methacrylate compounds among the ultraviolet-curable compounds contained within the ultraviolet-curable composition is preferably not more than 50 mol%, and is more preferably within a range from 10 to 40% by mass.

In those cases where trifunctional (meth)acrylates are included within the composition, the amount of these trifunctional (meth)acrylates among the ultraviolet-curable compounds contained within the ultraviolet-curable composition is preferably within a range from 5 to 40% by mass. Furthermore, in those cases where monofunctional and difunctional (meth)acrylates are also included within the composition, the amount of these monofunctional and difunctional (meth)acrylates among the ultraviolet-curable compounds contained within the ultraviolet-curable composition is preferably within a range from 5 to 15% by mass.

### (Photopolymerization initiator)

A photopolymerization initiator may be used in the present invention if required. Although there are no particular restrictions on the photopolymerization initiator, molecular cleavage-type initiators and hydrogen abstraction-type initiators are ideal as the photopolymerization initiator are particularly suitable. Examples of the photopolymerization initiator used in the present invention include molecular cleavage-type photopolymerization initiators such as benzoin isobutyl ether, 2,4-diethylthioxanthone, 2-isopropylthioxanthone, benzil, 1-hydroxycyclohexyl phenyl ketone, benzoin ethyl ether, benzyl dimethyl ketal, 2-hydroxy-2-methyl-1-phenylpropan-1-one, 1-(4-isopropylphenyl)-2-hydroxy-2-methylpropan-1-one and 2-methyl-1-(4-methylthiophenyl)-2-morpholinopropan-1-one, and hydrogen abstraction-type photopolymerization initiators such as benzophenone, 4-phenylbenzophenone, isophthalphenone and 4-benzoyl-4'-methyl-diphenyl sulfide.

### (Silicon-based additives)

Furthermore, by using silicon-based additives in the present invention, the separatability from resins such as polycarbonates can be further improved. As these silicon-based additives, silicon-based acrylates such as ethylene oxide-modified silicon acrylates and propylene oxide-modified acrylates, and modified silicon oils such as ethylene oxide-modified silicon oils and propylene oxide-modified silicon oils can be used.

Of these additives, ethylene oxide-modified silicon acrylates, propylene oxide-modified acrylates, ethylene oxide-modified silicon oils, and propylene oxide-modified silicon oils can be used particularly favorably.

The amount added of these silicon-based additives such as silicon-based acrylates and silicon-based oils is preferably within a range from 0.01 to 20 parts by mass, more preferably from 0.01 to 10 parts by mass, and most preferably from 0.1 to 1 part by mass, per 100 parts by mass of the ultraviolet-curable compounds within the ultraviolet-curable composition.

As the silicon-based acrylate, products such as Tegorad 2200N, 2500N and 2100N (manufactured by Degussa Japan Co., Ltd.) can be used, whereas for the modified silicon oils, either side-chain-modified oils or terminal-modified oils may be used, including the products L-7001, L-7002 and L-7006 manufactured by Dow Coming Toray Co., Ltd. These silicon-based additives are particularly effective in reducing the adhesive strength to polycarbonates.

### (Other Additives)

Furthermore, examples of optional components that may be used when formulating the composition of the present invention include the components described below, which may be added in amounts that do not impair the effects of the present invention. Namely, examples of these optional components include sensitizers for the photopolymerization initiator such as trimethylamine, methyldimethanolamine, triethanolamine, p-dimethylaminoacetophenone, ethyl p-dimethylaminobenzoate, isoamyl p-dimethylaminobenzoate, N,N-dimethylbenzylamine and 4,4'-bis(diethylamino)benzophenone. Moreover, other amines that do not undergo an addition reaction with the photopolymerizable compounds described above may also be used in combination with the above sensitizers. Of course, these amines are preferably selected so as to have superior solubility in the ultraviolet-curable compounds and so as not to inhibit the transmission of ultraviolet radiation. Furthermore, the ultraviolet-curable composition of the present invention may also include other additives according to need, including surfactants, leveling agents, thermal polymerization inhibitors, antioxidants such as hindered phenols and phosphites, and photostabilizers such as hindered amines.

### (Composition properties)

By ensuring that the ultraviolet-curable composition of the present invention has a B-type viscosity at 25°C of not more than 1,000 mPa·s, preferably within a range from 50 to 1,000 mPa·s, and still more preferably from 50 to 500 mPa·s, an intermediate layer of an optical disk, and in particular an intermediate layer of thickness 5 to 70 µm, can be formed favorably.

For the ultraviolet-curable composition of the present invention, the cured film generated upon curing by ultraviolet irradiation has an elastic modulus at 25°C that is preferably within a range from 1,000 to 4,000 MPa, more preferably from 1,000 to 3,500 MPa, and still more preferably from 2,000 to 3,500 MPa. By ensuring that the elastic modulus is within the above range, the transferred pit shapes can be favorably maintained even under variations in the heat or humidity.

### [Optical disk]

Next is a description of an optical disk of the present invention. The optical disk of the present invention includes at least one light reflection layer on a substrate, and has an intermediate layer composed of a cured film of the above ultraviolet-curable composition provided either between the substrate and the light reflection layer, or between two adjacent light reflection layers, wherein an uneven pattern is formed on the surface of this intermediate layer. Here the term "uneven pattern" refers to at least one of pits, grooves and lands.

In an optical disk of the present invention, the uneven pattern can be produced using a general-purpose resin such as a polycarbonate as the stamper. Optical disks are mass-produced as recording media, and because the optical disks of the present invention can be produced using the above type of low-cost stamper, the production costs can be reduced considerably compared with conventional optical disks.

Examples of specific configurations for the optical disk include (i) a configuration in which at least a first light reflection layer, a light transmissible intermediate layer, and a second light reflection layer are laminated in sequence on top of a first substrate having an uneven pattern, wherein the intermediate layer is a layer formed from a cured product of the ultraviolet-curable composition according to the present invention, an uneven pattern is formed on the second light reflection layer-side intermediate layer, i.e. on the surface facing the second light reflection layer, and a second substrate is provided as the outermost layer, and (ii) a configuration in which at least a first light reflection layer, a light transmissible intermediate layer, a second light reflection layer, and a light transmissible cover layer are laminated in sequence on top of a substrate having an uneven pattern, wherein the intermediate layer is a layer formed from a cured product of the ultraviolet-curable composition according to the present invention, and an uneven pattern is formed on the surface of the intermediate layer to which the second light reflection layer is laminated.

These optical disks may be provided with an information recording layer in those cases where a recordable disk format is required, and examples of specific configurations having an information recording layer include (i') a configuration in which at least a first information recording layer, a first light reflection layer, a light transmissible intermediate layer, a second information recording layer, and a second light reflection layer are laminated in sequence on top of a first substrate, wherein the intermediate layer is a layer formed from a cured product of the ultraviolet-curable composition according to the present invention, an uneven pattern is formed on the second information recording layer-side intermediate layer, i.e. on the surface facing the second light reflection layer, and a second substrate is provided as the outermost layer, and (ii') a configuration in which at least a first light reflection layer, a first information recording layer, a light transmissible intermediate layer, a second light reflection layer, a second information recording layer, and a light transmissible cover layer are laminated in sequence on top of a substrate having an uneven pattern, wherein the intermediate layer is a layer formed from a cured product of the ultraviolet-curable composition according to the present invention, and an uneven pattern is formed on the surface of the intermediate layer to which the second light reflection layer is laminated.

Additional information recording layers or light reflection layers may be laminated to these optical disks to produce configurations having three or more information recording regions.

Examples of the above configuration (i) include double layer DVD and double layer HD-DVD disks, and in such cases, an intermediate layer having a thickness of 30 to 60 µm can be used favorably.

Further, an example of the above configuration (ii) is a Blu-ray Disc, and in this case, it is preferable that the blue laser beam having an emission wavelength within a range from 370 to 430 nm efficiently pass through the light transparent layers. In the above configuration, the light transparent intermediate layer and the cover layer are provided as light transparent layers, and the thickness of the intermediate layer is preferably within a range from 10 to 40 µm, whereas the thickness of the cover layer is preferably within a range from 90 to 60 µm. The combined thickness of these light transparent layers is typically within a range from 50 to 150µm, and is preferably from 75 to 150 µm. The thickness of the light transparent layers is typically set to approximately 100 µm. Because this thickness has a large effect on the light transmittance and the reading and recording of signals, control of the thickness is essential. The light transparent layer may be formed from a single cured layer of the above thickness, or a plurality of layers may be laminated together.

When a cured product of the ultraviolet-curable composition of the present invention is used as the intermediate layer, the elastic modulus of the cured product at 100°C is preferably within a range from 400 to 2,500 MPa, and more preferably from 1,000 to 2,000 MPa. If the layer has an elastic modulus within the above range, then the layer exhibits excellent resistance to deformation caused by the heat generated during the writing of information, and also exhibits excellent separatability from polycarbonates.

As the light reflection layer, any material may be used that reflects the laser beam and enables the formation of a recordable or readable optical disk, and for example, metals such as gold, silver, aluminum, or alloys thereof, or inorganic compounds such as silicon may be used. In those cases where a blue laser is used, the use of either silver or an alloy containing silver as the main component is preferred, as such materials exhibit superior reflectance of light around 400 nm. The light reflection layer can be obtained by forming a thin film of one of these materials using a method such as sputtering or vacuum deposition. Further, if required, the light reflection layer may be formed as a semi-transparent light reflection layer.

A disc-shaped circular resin substrate can be used as the substrate, and a polycarbonate is preferred as the resin. In the case of a read-only optical disk, the pits that carry the recorded information are formed in the surface of the substrate to which the light reflection layer is laminated.

Furthermore, in the case of a recordable optical disk, an information recording layer is provided. Any layer that enables the recording and reading of information can be used as the information recording layer, including a phase-change recording layer, magneto-optical recording layer, or organic dye recording layer.

In cases where the information recording layer is a phase-change recording layer, the information recording layer is typically composed of a dielectric layer and a phase-change layer. The dielectric layer requires a function for alleviating the heat generated in the phase-change layer and a function for regulating the disk reflectance, and is typically formed using a mixed composition of ZnO and SiO₂. The phase-change layer exhibits a difference in reflectance as a result of phase-changing of the layer between an amorphous state and a crystalline state, and can be formed using a Ge-Sb-Te-based alloy, a Sb-Te based alloy, or an Ag-In-Sb-Te based alloy.

There are no particular restrictions on the organic dye used in an organic dye recording layer, and examples include not only azo dyes, but any other dye capable of forming pits under irradiation with the laser beam used for recording, including cyanine-based dyes, phthalocyanine-based dyes, naphthalocyanine-based dyes, anthraquinone-based dyes, triphenylmethane-based dyes, pyrylium-based or thiapyrylium salt-based dyes, squarylium-based dyes, chroconium-based dyes, formazan-based dyes, and metal complex dyes. Furthermore, the organic dye may be used in combination with a singlet oxygen quencher. The quencher is preferably an acetylacetonate-based metal complex, a bisdithiol-based metal complex such as a bisdithio-α-diketone-based or bisphenyldithiol-based metal complex, a thiocatechol-based metal complex, a salicylaldehyde oxime-based metal complex, or a thiobisphenolate-based metal complex. Moreover, amine-based quenchers such as amine compounds or hindered amines having nitrogen radical cations may also be used favorably. The materials used for each information recording layer may be either the same or different.

The optical disk of the present invention may be any configuration that includes a cured product layer of the ultraviolet-curable composition having an uneven pattern as the intermediate layer, including DVD optical disks such as write-once DVD-R and DVD+R disks, double layer DVD-R and DVD+R disks, and rewritable DVD-RW, DVD+RW and DVD-RAM disks, or optical disks in which a light transparent layer is formed on the optical disk substrate by laminating a cured layer of the ultraviolet-curable composition, such as the new-generation optical disks (product names: "Blu-ray" and "HD-DVD") that use a blue or violet laser beam for reading and writing information.

### [Method of producing optical disk]

An optical disk of the present invention can be favorably produced by a production method that includes a step of forming an intermediate layer with an uneven pattern formed therein by: sandwiching the ultraviolet-curable composition of the present invention between a stamper, which has an uneven pattern on the surface thereof and in which at least this surface on which the uneven pattern is formed is composed of a polycarbonate, and a substrate having a light reflection layer, irradiating the ultraviolet-curable composition with ultraviolet radiation to form a light transparent intermediate layer composed of a cured product of the ultraviolet-curable composition, and then separating the stamper from the intermediate layer.

In the substrate having a light reflection layer, either the light reflection layer may be the outermost surface layer, or another layer such as an information recording layer laminated to the light reflection layer may be the outermost surface layer. By including the above step, an intermediate layer having an uneven pattern composed of grooves and pits and the like can be formed on the substrate having the light reflection layer, and a multilayer optical disk can then be produced by forming a light transparent layer and an information recording layer and the like. A light transparent layer having no uneven pattern or another substrate is laminated to the disk as the outermost surface layer.

If the optical disk is a read-only disk, then a light reflection layer is laminated to the substrate having an uneven pattern formed on the surface thereof, the ultraviolet-curable composition of the present invention described above is sandwiched between this light reflection layer and a stamper in which at least the surface bearing the uneven pattern is formed from a polycarbonate, the ultraviolet-curable composition is irradiated with ultraviolet radiation to form an intermediate layer composed of a cured product of the ultraviolet-curable composition, and the intermediate layer and the stamper are then separated, thereby forming an intermediate layer with an uneven pattern formed therein. Another light reflection layer is then formed, and an intermediate layer similar to that described above and an outermost light transparent layer or substrate or the like are then laminated to complete formation of the optical disk.

A recordable and readable optical disk is produced, for example, using one of the production methods (I) or (II) described below.
(I) A method of producing an optical disk containing at least a first information recording layer, a first light reflection layer, an intermediate layer, a second information recording layer, and a second light reflection layer laminated in sequence onto a substrate, the method including:
   (1) laminating the first information recording layer and the first light reflection layer in sequence onto the substrate,
   (2) sandwiching the ultraviolet-curable composition of the present invention between a stamper, which has an uneven pattern on the surface thereof and in which at least this surface on which the uneven pattern is formed is composed of a polycarbonate, and the first light reflection layer, and
      irradiating the ultraviolet-curable composition with ultraviolet radiation to form an intermediate layer composed of a cured product of the ultraviolet-curable composition, and then separating the intermediate layer and the stamper to form an intermediate layer with an uneven pattern formed therein, and
   (3) laminating the second information recording layer and the second light reflection layer in sequence onto the intermediate layer.

(II) A method of producing an optical disk containing at least a first light reflection layer, a first information recording layer, an intermediate layer, a second light reflection layer, a second information recording layer, and a light transparent layer laminated in sequence onto a substrate, the method including:
   (1') laminating the first light reflection layer and the first information recording layer in sequence onto the substrate,
   (2') sandwiching the ultraviolet-curable composition of the present invention between a stamper, which has an uneven pattern on the surface thereof and in which at least this surface on which the uneven pattern is formed is composed of a polycarbonate, and the first information recording layer, and
      irradiating the ultraviolet-curable composition with ultraviolet radiation to form an intermediate layer composed of a cured product of the ultraviolet-curable composition, and then separating the intermediate layer and the stamper to form an intermediate layer with an uneven pattern formed therein, and
   (3') laminating the second light reflection layer, the second information recording layer and the light transparent layer in sequence onto the intermediate layer.

Optical disks having two information recording layers can be formed using the methods (I) and (II) described above, and by repeating either the steps (2) and (3), or the steps (2') and (3'), optical disks having three of four information recording layers can be formed. Furthermore, in the steps (3) and (3'), either the light reflection layer, the information recording layer and the light transparent layer may be laminated in sequence, or a laminate prepared by laminating the required layers in advance may be laminated to the intermediate layer in a single process.

In the production method of the present invention, because a polycarbonate can be used for the stamper, the optical disk can be produced at low cost. Furthermore, stampers composed of other general-purpose resins can also be used, including stampers formed from acrylic resins, methacrylic resins, polycarbonate resins, polyester resins, polystyrene resins and urethane resins.

The ultraviolet irradiation may be conducted using either a continuous irradiation system that uses a metal halide lamp or a high-pressure mercury lamp or the like, or a flash irradiation system disclosed in USP 5,904,795. In terms of enabling efficient curing, the flash irradiation system is preferred. The gel fraction of the cured product is preferably within a range from 70 to 100%, and is more preferably from 85 to 100%.

### EXAMPLES

### (Examples 1 to 14, Comparative examples 1 to 7)

### <Preparation of compositions and optical disk samples>

Using the formulations shown below in Tables 1 to 4 (the numbers detailing the formulations in the tables represent parts by mass), the various component materials were dissolved by heating at 60°C for three hours, thus completing preparation of ultraviolet-curable compositions of each of the examples and comparative examples.

Subsequently, each composition of the above examples and comparative examples was applied to an optical disk polycarbonate substrate having a thickness of 1.2 mm and a diameter of 120 mm, in an amount sufficient to generate a film thickness of 30 µm. The applied coating was then irradiated with ultraviolet radiation to generate a cured film, thereby completing preparation of an optical disk sample for evaluation purposes. The ultraviolet lamps used were a Flash Lamp SBC-17 manufactured by Ushio Inc. (voltage: 1450 V, 15-short) and a metal halide lamp manufactured by Eyegraphics Co., Ltd. (fitted with a cold mirror, lamp output: 120 W/cm, accumulated irradiation dose: 0.5 J/cm²).

### <Separated surface inspection, Adhesion test>

A double-sided tape was bonded to a 10 mm square stainless steel attachment, and the cured film of the above optical disk sample was then bonded to the attachment. The cured film was then cut around the periphery of the attachment using a cutter knife. Subsequently, using an electrically operated vertical motorized stand MX-500N manufactured by Imada Co., Ltd., the 10 mm square stainless steel attachment was pulled in a 90° direction at a rate of 125 mm/min., and the adhesive strength was measured.
Further, the state of the polycarbonate substrate following separation was also inspected. The evaluation criteria are listed bellow.
○○: the adhesive strength to the PC substrate was not more than 1.5 kg/cm²
○: the adhesive strength to the PC substrate was not more than 3 kg/cm²
×: the adhesive strength to the PC substrate exceeded 3 kg/cm²

### <Measurement of elastic modulus>

The ultraviolet-curable composition was applied to a glass substrate in an amount sufficient to generate a film thickness of 100 µm, and the composition was then cured by irradiation with a metal halide lamp (fitted with a cold mirror, lamp output: 120 W/cm) in a nitrogen atmosphere using an irradiation dose of 0.5 J/cm². The elastic modulus of the resulting cured film was measured using an automatic viscoelasticity analyzer (Solid Analyzer RSA-III, manufactured by Rheometric Scientific Inc.), and the dynamic elastic modulus E' at 100°C was determined. This value of E' was recorded as the elastic modulus.
The measurement conditions were as listed below.
(1) sample size: width 6 mm, length 20 mm
(2) strain: 0.1%
(3) frequency: 3.5 Hz
(4) of temperature increase: 3°C/min.

### <Method of prepaying optical disk>

An optical disk substrate of diameter 120 mem and thickness 1.2 mm was prepared, an alloy containing silver as the main component was sputtered onto the substrate in a thickness of 20 to 40 nm, the ultraviolet-curable composition shown in Table 1 was spin coated onto the metal reflection film in an amount sufficient to generate a film thickness following curing of 10 ± 3 µm, and the composition was irradiated with ultraviolet radiation using a mercury lamp fitted with a cold mirror (120 W/cm), using an accumulated irradiation dose of 0.4 J/cm² (measured using an actinometer UVPF-36, manufactured by Eyegraphics Co., Ltd.), thereby curing the composition and forming an optical disk.

### <Evaluation of optical disk tilt>

The change in tilt of the obtained optical disk was measured using an "Argus Blu" device manufactured by Dr. Schwab Inspection Technology GmbH. The change in tilt was determined from the average value for the radial tilt in the region from a radius of 40 mm to a radius of 45 mm.
The criteria used for evaluating the change in tilt are listed below. (Tilt)
○○: the change in tilt following disk preparation was within ± 0.8°
○: the change in tilt following disk preparation was within ± 1.5°
×: the change in tilt following disk preparation exceeded ± 1.5°

**[Table 1]**

| | Example 1 | Example 2 | Example 3 | Example 4 | Example 5 | Example 6 | Example 7 |
|---|---|---|---|---|---|---|---|
| UA1 | 20 | 20 | 20 | 20 | 20 | 20 | 20 |
| DPHA | 30 | 25 | 17 | 10 | 5 | 35 | |
| PETA | | | | | | | 17 |
| TMPTA | 5 | 10 | 18 | 25 | 30 | | 18 |
| TMPTMA | | | | | | | |
| IBXA | 35 | 35 | 35 | 35 | 35 | 35 | 35 |
| THFMA | | | | | | | |
| Irg.184 | 10 | 10 | 10 | 10 | 10 | 10 | 10 |
| Tegorad 2200N | | | | | | 0.2 | 0.2 |
| Viscosity [mPa·s] | 480 | 396 | 288 | 218.5 | 180 | 568 | 230 |
| Change in tilt [°] | -0.55 | -0.3 | -0.13 | -0.15 | -0.15 | -0.6 | -0.34 |
| Tilt evaluation | ○○ | ○○ | ○○ | ○○ | 00 | ○○ | ○○ |
| PC adhesive strength [kg/m²] | 0.96 | 1.08 | 1.44 | 1.99 | 2.32 | 1.88 | 1.18 |
| Separatability evaluation | ○○ | ○○ | ○○ | ○ | ○ | ○ | ○○ |

**[Table 2]**

| | Comparative example 1 | Comparative example 2 | Comparative example 3 |
|---|---|---|---|
| UA1 | | 20 | 20 |
| DPHA | 17 | | 17 |
| TMPTA | 38 | 35 | 18 |
| TMPTMA | | | |
| IBXA | 35 | 35 | |
| THFMA | | | 35 |
| Irg.184 | 10 | 10 | 10 |
| Tegorad 2200N | 0.2 | 0.2 | 0.2 |
| Viscosity [mPa·s] | 49.5 | 149 | 102.5 |
| Change in tilt [°] | -0.47 | -0.43 | -0.34 |
| Tilt evaluation | ○○ | ○○ | ○○ |
| PC adhesive strength [kg/m²] | 18.17 | 13.25 | 17.6 |
| Separatability evaluation | × | × | × |

**[Table 3]**

| | Example 8 | Example 9 | Example 10 | Example 11 | Example 12 | Example 13 | Example 14 |
|---|---|---|---|---|---|---|---|
| UA1 | 15 | 15 | 25 | | | | |
| UA2 | | | | 15 | | | |
| UA3 | | | | | 15 | | |
| UA4 | | | | | | 15 | |
| UA5 | | | | | | | 15 |
| DPHA | 10 | 10 | 10 | 10 | 10 | 10 | 10 |
| TMPTA | 25 | 25 | 25 | 25 | 25 | 25 | 25 |
| TMPTMA | 20 | 20 | 15 | 15 | 15 | 15 | 15 |
| IBXA | 20 | | | | | | |
| LIB-X | | | 15 | 25 | 25 | 25 | 25 |
| TCDDA | | 20 | | | | | |
| LAMA | | | | | | | |
| THFMA | | | | | | | |
| Irg.184 | 10 | 10 | 10 | 10 | 10 | 10 | 10 |
| Tegorad 2200N | 0.2 | 0.2 | 0.2 | | | | |
| Viscosity [mPa.s] | 180 | 341 | 566 | 95 | 134 | 124 | 140 |
| Elastic modulus (25°C) [MPa] | 3070 | 3680 | 2020 | 3425 | 3555 | 2655 | 3700 |
| Change in tilt [°] | -0.81 | -1.08 | -0.9 | -0.77 | -0.65 | -0.77 | -0.72 |
| Tilt evaluation | ○ | ○ | ○ | ○○ | ○○ | ○○ | ○○ |
| PC adhesive strength [kg/m²] | 1.28 | 2.31 | 1.8 | 1.4 | 1.2 | 1.2 | 1.1 |
| Separatability evaluation | ○ | ○ | ○ | ○○ | ○○ | ○○ | ○○ |

**[Table 4]**

| | Comparative example 4 | Comparative example 5 | Comparative example 6 | Comparative example 7 |
|---|---|---|---|---|
| UA1 | | 15 | 15 | 15 |
| UA2 | | | | |
| UA3 | | | | |
| UA4 | | | | |
| UA5 | | | | |
| DPHA | 39 | | 10 | 10 |
| TMPTA | 16 | 55 | 25 | 25 |
| TMPTMA | 10 | | 20 | 20 |
| IBXA | | | | |
| IB-X | 15 | 20 | | |
| TCDDA | 15 | | | |
| LAMA | | | 20 | |
| THFMA | | | | 20 |
| Irg.184 | 5 | 10 | 10 | 10 |
| Tegorad 2200N | 0.2 | 0.2 | 0.2 | 0.2 |
| Viscosity [mPa·s] | 200 | 106 | 152 | 188 |
| Elastic modulus (25°C) [MPa] | 3000 | 3340 | 2620 | 2250 |
| Change in tilt [°] | -1.53 | -0.79 | -0.44 | -0.43 |
| Tilt evaluation | ○ | ○○ | ○○ | ○○ |
| PC adhesive strength [kg/m²] | 4.3 | 9.71 | 15.27 | 15.22 |
| Separatability evaluation | × | × | × | × |

Each of the compounds shown in Tables 1 to 4 are listed bellow.

### [Urethane (meth)acrylates]

UA1: a trifunctional urethane acrylate (G-PPG/IPDI/HEA, Mn = 10,000), Photomer 6008, manufactured by Cognis Japan Ltd.
UA2: a hexafunctional urethane acrylate (TDI/PETtri-A, Mn = 1,000), EB220, manufactured by Daicel-Cytec Co., Ltd.
UA3: a trifunctional urethane acrylate (TMP/NPG/IPDI/HEA, Mn = 2,300), EB4886, manufactured by Daicel-Cytec Co., Ltd.
UA4: a hexafunctional urethane acrylate (HDI/PETtri-A. Mn = 800), EB5129, manufactured by Daicel-Cytec Co.,. Ltd.
UA5: a hexafunctional urethane acrylate (IPDI/PETtri-A, Mn = 2,200), CN968, manufactured by SARTOMER Corporation.

(Note: the meanings of the abbreviations used above are as follows:
G-PPG: glycerol-modified propylene glycol diacrylate
TMP: trimethylolpropane
NAG: neopentyl glycol
IPDI: isophorone diisocyanate
HDI: hexamethylene diisocyanate
HEA: 2-hydroxyethyl acrylate
PETtri-A: pentaerythritol triacrylate

### [Other (meth)acrylates]

DPHA: dipentaerythritol hexaacrylate, Photomer 4600, manufactured by Cognis Japan Ltd.
PETA: pentaerythritol tetraacrylate
TMPTA: trimethylolpropane triacrylate
TMPTMA: trimethylolpropane trimethacrylate
IBXA: isobornyl acrylate, manufactured by Osaka Organic Chemical Industry Ltd.
IB-X: isobornyl methacrylate, manufactured by Kyoeisha Chemical Co., Ltd.
TCDDA: tricyclodecanedimethanol diacrylate, M-260, manufactured by Miwon Commercial Co., Ltd.
LAMA: lauryl methacrylate, manufactured by Kyoeisha Chemical Co., Ltd.
THFMA: tetrahydrofurfuryl methacrylate

### [Polymerization initiator, additives]

Irg.184: IRGACURE 184, manufactured by Ciba Specialty Chemicals Inc.
Tegorad 2200N: a silicon-based additive, manufactured by Degussa Japan Co., Ltd.

As is evident from Tables l to 4 shown above, by using the ultraviolet-curable compositions obtained in examples 1 to 14 of the present invention, favorable separatability was achieved, and no damage to the substrate or the cured film was noticeable. Those compositions for which the adhesive strength was 1.5 or lower exhibited particularly low resistance during peeling, and were able to be readily separated. Further, the change in tilt from before curing to after curing was minimal, meaning favorable film formation could be achieved.

In contrast, in comparative examples 1 to 7, the compositions bonded extremely powerfully to the polycarbonate substrate. Particularly in comparative examples 1 to 3 and comparative example 6 to 7, in which the adhesive strength exceeded 10 kg/cm², large cracks were observed on the separated surface, and sections of approximately 5 mm square were lost from the polycarbonate substrate. Furthermore, in comparative examples 4 and 5, the resistance during peeling was large, and the separatability was unsatisfactory.

### DESCRIPTION OF THE DRAWINGS

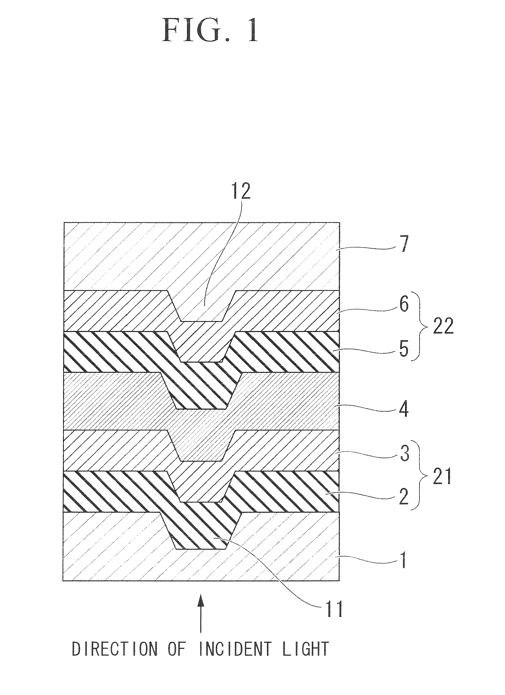

FIG. 1 is a diagram illustrating one example of a double layer optical disk of the present invention.

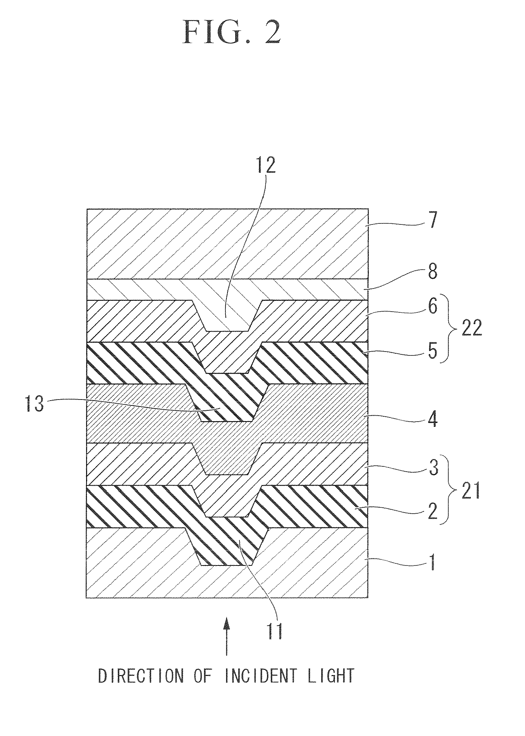

FIG. 2 is a diagram illustrating one example of a double layer optical disk of the present invention.

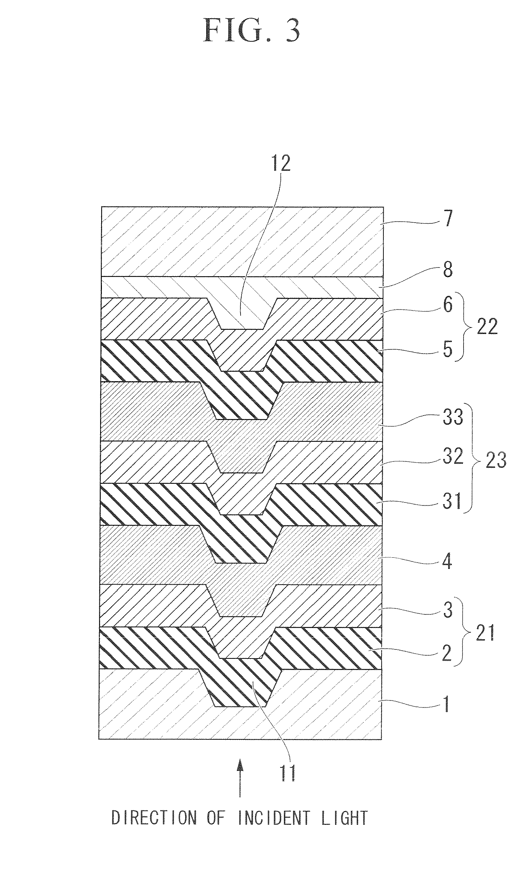

FIG. 3 is a diagram illustrating one example of a triple layer optical disk of the present invention.

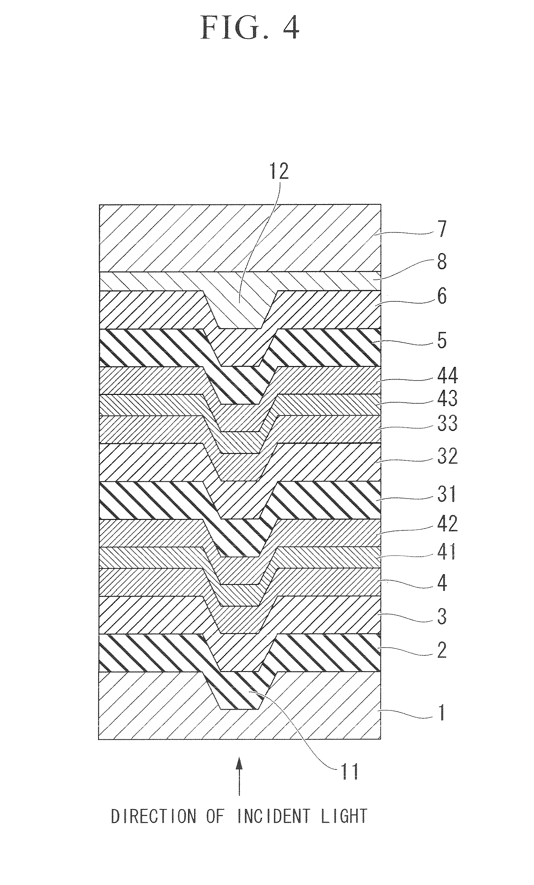

FIG. 4 is a diagram illustrating one example of a triple layer optical disk of the present invention.

### DESCRIPTION OF THE REFERENCE SYMBOLS

1 Substrate
2 Dye recording layer
3 Semi-transparent light reflection layer
4 Light transparent layer of ultraviolet-curable composition
5 Dye recording layer
6 Light reflection layer
7 Substrate
8 Adhesive layer
11 Protruding recording track (groove)
12 Protruding recording track (groove)
13 Protruding recording track (groove)
21 First recording layer composed of the dye recording layer 2 and the semi-transparent light reflection layer 3 laminated together
22 Second recording layer composed of the dye recording layer 5 and the light reflection layer 6 laminated together
23 Laminate
31 Dye recording layer
32 Semi-transparent light reflection layer
33 Light transparent layer of ultraviolet-curable composition
41 Light transparent layer
42 Light transparent layer
43 Light transparent layer
44 Light transparent layer

## Claims

1. An ultraviolet-curable composition for an optical disk intermediate layer, comprising:
a urethane (meth)acrylate (a) having three or more radical-polymerizable unsaturated bonds;
a (meth)acrylate (b) having four or more radical-polymerizable unsaturated bonds which is other than the urethane (meth)acrylate (a); and
a monofunctional alicyclic (meth)acrylate (c), wherein
a B-type viscosity at 25°C is not more than 1,000 mPa·s.

2. An ultraviolet-curable composition for an optical disk intermediate layer according to Claim 1, wherein
among all ultraviolet-curable compounds contained within the ultraviolet-curable composition, an amount of the urethane (meth)acrylate (a) having three or more radical-polymerizable unsaturated bonds is within a range from 10 to 40% by mass,
an amount of the (meth)acrylate (b) having four or more radical-polymerizable unsaturated bonds is within a range from 5 to 40% by mass, and
an amount of the monofunctional alicyclic (meth)acrylate (c) is within a range from 10 to 40% by mass.

3. An ultraviolet-curable composition for an optical disk intermediate layer according to Claim 1 or Claim 2, wherein
the urethane (meth)acrylate (a) having three or more radical-polymerizable unsaturated bonds is obtained by reacting a polyol compound, a diisocyanate compound and a hydroxyl group-containing (meth)acrylate,
the polyol compound is at least one compound selected from the group consisting of pentaerythritol, trimethylolpropane, neopentyl glycol, and propylene glycol-modified glycerol compounds, and
the diisocyanate compound is at least one isocyanate compound selected from the group consisting of isophorone diisocyanate, tolylene diisocyanate and hexamethylene diisocyanate.

4. An ultraviolet-curable composition for an optical disk intermediate layer according to any one of Claims 1 to 3, wherein the (meth)acrylate (b) having four or more radical-polymerizable unsaturated bonds is at least one compound selected from the group consisting of pentaerythritol tetraacrylate, pentaerythritol hexaacrylate and dipentaerythritol hexaacrylate.

5. An ultraviolet-curable composition for an optical disk intermediate layer according to any one of Claims 1 to 4, further comprising a (meth)acrylate (d) having three radical-polymerizable unsaturated bonds, in an amount of 5 to 40% by mass among all ultraviolet-curable compounds contained within the ultraviolet-curable composition.

6. An ultraviolet-curable composition for an optical disk intermediate layer according to any one of Claims 1 to 5, wherein
an amount of compounds having methacryloyl groups is not more than 50% by mass of all ultraviolet-curable compounds contained within the ultraviolet-curable composition.

7. An optical disk comprising at least two light reflection layers on a substrate, wherein
an intermediate layer composed of a cured product of an ultraviolet-curable composition for an optical disk intermediate layer according to any one of Claims 1 to 6 is disposed between two adjacent light reflection layers, and
the intermediate layer has an uneven pattern on a surface thereof.

8. An optical disk comprising at least a first information recording layer, a first light reflection layer, a light transmissible intermediate layer, a second information recording layer, and a second light reflection layer laminated in sequence on a substrate, wherein
the intermediate layer is a layer composed of a cured product of an ultraviolet-curable composition for an optical disk intermediate layer according to any one of Claims 1 to 6,
an uneven pattern is formed on a surface of the intermediate layer to which the second information recording layer is laminated, and
recording or reading is performed by a light that enters the optical disk from a side of the substrate.

9. An optical disk comprising at least a first light reflection layer, a first information recording layer, a light transmissible intermediate layer, a second light reflection layer, a second information recording layer, and a light transparent layer laminated in sequence on a substrate, wherein
the intermediate layer is a layer composed of a cured product of an ultraviolet-curable composition for an optical disk intermediate layer according to any one of Claims 1 to 6,
an uneven pattern is formed on a surface of the intermediate layer to which the second light reflection layer is laminated, and
recording or reading is performed by a light that enters the optical disk from a side of the light transparent layer.
